# EUROPÄISCHE PATENTSCHRIFT

(11) **EP 0 755 058 B1**
(45) Veröffentlichungstag und Bekanntmachung des Hinweises auf die Patenterteilung: **02.02.2000**
(21) Anmeldenummer: 96810406.7
(22) Anmeldetag: 19.06.1996
(51) Int. Cl.: H01B 1/20, H02K 3/30, H01B 1/24, H02K 11/00

(54) **Elektrisch und thermisch leitfähiger Kunststoff und Verwendung dieses Kunststoffs**
Electrically and thermically conductive plastics material and the application thereof
Matériau plastique conduisant l'électricité et la chaleur et son application

(30) Priorität: 14.07.1995 DE 19525692
(43) Veröffentlichungstag der Anmeldung: 22.01.1997
(73) Patentinhaber: ABB RESEARCH LTD., 8050 Zürich (CH)
(72) Erfinder: Strümpler, Ralf, Dr., 5412 Gebenstorf (CH); König, Friedrich, 5225 Oberbözberg (CH)
(74) Vertreter: Kaiser, Helmut

(56) Entgegenhaltungen:
- EP-A- 0 064 558
- EP-A- 0 440 865
- EP-A- 0 502 483
- EP-A- 0 681 911
- US-A- 3 514 651
- US-A- 4 473 765
- DATABASE WPI Week 9106 Derwent Publications Ltd., London, GB; AN 91-040645 XP002028562 & JP 02 307 911 A (KURARAY KK) , 21.Dezember 1990
- DATABASE WPI Week 8704 Derwent Publications Ltd., London, GB; AN 87-02515 XP002028563 & JP 61 281 153 A (SUMITOMO BAKELITE KK) , 11.Dezember 1986
- DATABASE WPI Week 8439 Derwent Publications Ltd., London, GB; AN 84-241315 XP002028564 & JP 59 145 662 A (ATOM KAGAKU TORYO) , 20.August 1984
- DATABASE WPI Week 8241 Derwent Publications Ltd., London, GB; AN 82-86651e XP002028565 & JP 57 142 647 A (RICOH KK) , 3.September 1982
- PATENT ABSTRACTS OF JAPAN vol. 008, no. 243 (E-277), 8.November 1984 & JP 59 122332 A (TOSHIBA KK), 14.Juli 1984,

## Beschreibung

### TECHNISCHES GEBIET

Bei der Erfindung wird ausgegangen von einem Laminat nach dem Oberbegriff von Patentanspruch 1.

### STAND DER TECHNIK

Ein Laminat der vorstehend genannten Art ist beispielsweise in EP 0 440 865 A1 beschrieben. Dieses Laminat dient der elektrischen Isolation von Wicklungsstäben, die in Nuten einer elektrischen Maschine angeordnet sind. Neben der Isolation und Fixierung der Wicklungen in den Nuten führt das Laminat in den Wicklungen entstehende Wärme in den die Nuten enthaltenden Rotor oder Stator der Maschine. Das Laminat enthält ein Glimmerband und eine das Glimmerband einbettende Kunststoffmatrix aus einem vorzugsweise duromeren Polymer.

Aus EP 0 502 483 A und den Derwent Publikationen AN 91-040645 (JP-A 02 307 911), AN 87-025158 (JP-A 61 281 153), AN 84-241315 (JP-A 59 145 262) sowie AN 82-86651e (JP-A 57 142 647) sind elektrisch leitende Kunstoffe mit elektrisch leitfähigen Füllstoffteilchen aus dotierter Keramik, wie dotiertem Metalloxid, und mit einem vorzugsweise von duromerem Harz gebildeten Bindemittel bekannt. Diese Kunststoffe weisen oberhalb grosser Füllstoffanteile eine sich nur noch geringfügig verändernde, elektrische Leitfähigkeit auf und werden bevorzugt als antistatischer Belag verwendet. Der in der AN 91-040645 beschriebene Kunststoff dient bei der Herstellung von elektrisch leitfähigen Komposit-Fasern der Umhüllung von elektrisch nichtleitenden Fasern aus einem thermopolastischen Material.

Einen elektrisch und thermisch leitfähigen Kunststoff auf der Basis von Polypropylen und Russ beschreibt R.Gilg "Russ für leitfähige Kunststoffe" in einem Sonderdruck aus: Kunststoff-berater 22, 262 (1977) und 22, 3312 (1977), Kunststoff-Verlag GmbH & Co, Isernhagen. Wird dieser Kunststoff als Werkstoff für Kabelabschirmungen oder Steuerelektroden verwendet, so sollte er einen typischerweise zwischen 10² und 10¹⁴ [Ω·cm] liegenden spezifischen Widerstand aufweisen. In diesem Bereich ändert sich der spezifische Widerstand resp. die elektrische Leitfähigkeit des Kunststoffs bei einer geringfügigen Änderung des Russanteils sehr stark. Beispielsweise kann sich der spezifische Widerstand bei einer Erhöhung des Russanteils um ca. 1 Gewichtsprozent von 10¹² [Ω·cm] auf 10⁴ [Ω·cm] verringern. Wegen dieser stark nichtlinearen Abhängigkeit des spezifischen elektrischen Widerstands resp. der elektrischen Leitfähigkeit von der Russmenge ist es schwierig, in reproduzierbarer Weise einen elektrisch leitfähigen Kunststoff auf der Basis von Polymer und Russ herzustellen, welcher eine genau definierte elektrische Leitfähigkeit aufweist. Darüber hinaus hängt die elektrische Leitfähigkeit von der Mikrostruktur der Russverteilung im Kunststoff ab. Da während des Herstellens des Kunststoffs im allgemeinen hohe Scherkräfte auftreten, kann die gegebenenfalls netzförmig ausgebildete Struktur des Russes zerstört werden. Zudem können bei Verwendung eines Polymers auf der Basis eines Duromers Russteilchen aufgrund von Vernetzungsreaktionen lokal agglomerieren und dadurch die Homogenität des Kunststoffs ganz wesentlich beeinträchtigen.

### KURZE DARSTELLUNG DER ERFINDUNG

Der Erfindung, wie sie in den Patentanspruch 1 angegeben ist, liegt die Aufgabe zugrunde, ein Laminat der eingangs genannten Art zu schaffen, das eine genau definierte elektrische Leitfähigkeit aufweist und sich zugleich durch eine gute thermische Leitfähigkeit auszeichnet.

Das Laminat nach der Erfindung lässt sich durch Wahl eines geeigneten Füllstoffs äusserst einfach herstellen, da seine elektrische Leitfähigkeit weitgehend unabhängig vom Herstellverfahren lediglich durch geeignetes Einstellen der intrinsischen elektrischen Leitfähigkeit des im Kunststoff vorgesehenen Füllstoffs bestimmt ist. Durch mehr oder weniger starkes Dotieren von halbleitendem Material kann so in einfacher und reproduzierbarer Weise ein Laminat mit einer vorgegebenen elektrischen Leitfähigkeit hergestellt werden. Hierbei wird der Füllstoffgehalt derart hoch gewählt, dass die elektrische Leitfähigkeit des Kunststoffs bei einer Erhöhung des Füllstoffanteils weitgehend unverändert bleibt, eine nichtlineare Änderung der elektrischen Leitfähigkeit bei einer geringfügigen Erhöhung des Füllstoffanteils also stets ausgeschlossen ist.

Im allgemeinen ist der Füllstoffgehalt grösser 30 Volumenprozent. Ist der Füllstoffgehalt grösser 40 Volumenprozent, so weist der Kunststoff selbst bei Schwankungen des Füllstoffanteils im Prozentbereich mit grosser Sicherheit eine praktisch konstante elektrische Leitfähigkeit auf, da die zu einer nichtlinearen Änderung der elektrischen Leitfähigkeit führende Perkolationsschwelle nicht erreicht werden kann.

Mit besonderem Vorteil ist das halbleitende Material eine Keramik, insbesondere auf der Basis von BaTiO₃, CdS, Si, SiC, SnO₂, SrTiO₃, TiO₂, Y₁Ba₂,Cu₃O₇₋ₓ und/oder ZnO. Zum einen weist dann der Kunststoff wegen des grossen Füllstoffgehalts hervorragende mechanische Eigenschaften auf. Zum anderen zeichnet sich dann das Laminat auch durch eine gute thermische Leitfähigkeit und einen geringen Wärmeausdehnungskoeffizienten aus. Dies ist eine Folge der Materialeigenschaften der keramischen Halbleiter. Typische Werte der spezifischen thermischen Leitfähigkeit und des Wärmeausdehnungskoeffizienten betragen für ZnO 54 [W/mK] bei 300 K und 7,5·10⁻⁶ [K⁻¹] und für SiC 63-155 [W/mK] bei 400 K und 5,5·10⁻⁶ [K⁻¹], hingegen bei einem Polymer, wie etwa einem Epoxy, bis zu 0,3 [W/mK] und 50 - 200·10⁻⁶ [K⁻¹].

Als Dotierstoff wird bevorzugt ein Metall, wie insbesondere Al, Cr, In, Li, Ti und/oder Zr, verwendet, wobei der Metallanteil im allgemeinen bis zu ein Prozent des Gewicht der halbleitenden Keramik beträgt und typischerweise im Promillebereich liegt.

Da die elektrische Leitfähigkeit hauptsächlich durch die Dotierung des halbleitenden Materials bestimmt ist, kann Füllstoff bis zum Erreichen der höchstens Packungsdichte in den Kunststoff eingebracht sein. Es können so optimale thermische Leitfähigkeit und geringer Wärmeausdehnungskoeffizient erreicht werden. Durch geeignete Verringerung des Füllstoffanteils kann ein Kunststoff mit einer definierten elektrischen Leitfähigkeit und hoher thermischer Leitfähigkeit erreicht werden, welcher einen an hochgefüllte Isolatoren auf der Basis eines Polymers (40 - 50 Volumenprozent Al₂O₃ und/oder SiO₂), wie insbesondere Epoxy, angepassten Wärmeausdehnungskoeffizienten besitzt.

Das Polymer ist mit Vorteil ein Thermoplast, da ein Thermoplast besonders schnell verarbeitet werden kann, und da dessen Viskosität unterhalb seiner Schmelztemperatur im allgemeinen abrupt zunimmt. Anstelle eines Thermoplasts kann aber auch ein Duroplast oder ein Elastomer als Polymer verwendet werden.

Der Kunststoff kann aus dem Polymer und dem elektrisch halbleitendem Material in herkömmlicher Weise etwa durch Mischen und Extrudieren oder Druck- oder Spritzgiessen hergestellt werden.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: ein Diagramm, in dem der spezifische elektrische Widerstand einer mit Aluminium dotierten Zinkoxidkeramik in Abhängigkeit vom Dotierstoffgehalt dargestellt ist,
- Fig. 2: ein Diagramm, im dem der spezifische elektrische Widerstand eines im Laminat nach der Erfindung vorgesehenen Kunststoffs und eines Vergleichskunststoffs jeweils in Abhängigkeit vom Füllstoffanteil, gemessen in Volumenprozent, dargestellt ist,
- Fig. 3: eine Aufsicht auf einen Schnitt durch ein Laminat nach der Erfindung aus einem Glasgewebestapel und einem die Lagen des Stapels miteinander verbindenden Kunststoff, und
- Fig. 4: eine Aufsicht auf einen quer zu den Stabachsen geführten Schnitt durch eine Wicklungsstäbe und eine das Laminat gemäss Fig.3 enthaltende Nutverkeilung aufnehmende Nut eines Statorblechpakets eines Generators.

### WEGE ZUR AUSFÜHRUNG DER ERFINDUNG

Aus einem Thermoplast geringer Dichte als Polymer und Halbleitermaterial wurden Versuchsproben aus elektrisch leitfähigem Kunststoff hergestellt. Die beiden Werkstoffe wurden in einem Schermischer bei ca. 130°C während ca. 15 min miteinander vermischt. Aus der sich ergebenden hochviskosen Mischung wurden Materialproben entnommen, welche bei ca. 150°C und einem Druck von ca. 28 MPA zu Versuchsproben für die Messung der elektrischen und thermischen Leitfähigkeit heissgepresst wurden.

Als Thermoplast wurde ein unter dem Handelsnamen Lupolen 1800 SP 15 von der Fa. BASF AG, Ludwigshafen, vertriebenes Polyäthylen geringer Dichte verwendet. Das Halbleitermaterial war pulverförmiges, entweder mit ca. 500 ppm Aluminium dotiertes oder undotiertes Zinkoxid (ZnO). Das dotierte ZnO wurde durch Sprühtrocknen einer aufgeschlämmtes ZnO-Pulver mit Teilchengrössen bis 200 µm und gelöstes Aluminiumacetat oder -nitrat enthaltenden, wässerigen Suspension und nachfolgendes dreistündiges Erhitzen eines beim Sprühtrocknen gebildeten Pulvers auf ca. 1200°C gebildet. Je nach den Bedingungen beim Sprühtrocknen weist das gebildete Pulver Partikel mit Durchmessern bis 300 µm auf. Die Form der Partikel kann kugelförmig oder in einer Vorzugsrichtung gestreckt sowie kompakt oder hohl sein. Beim Erhitzen zersetzt sich das Aluminiumacetat oder -nitrat und das gebildete metallische Aluminium diffundiert in das ZnO.

Durch geeignete Wahl der Sintertemperatur, der Sinteratmosphäre und/oder der Dotierstoffmenge und -beschaffenheit kann der Wert des intrinsischen spezifischen elektrischen Widerstandes des dotierten ZnO oder eines anderen dotierten halbleitenden Materials abgeändert und in einem weiten Bereich eingestellt werden. Für das mit Aluminium dotierte ZnO ergeben sich in Abhängigkeit vom Dotierstoffgehalt folgende Werte des spezifischen elektrischen Widerstands:

| Probe | Aluminiumgehalt [ppm] | spezifischer elektrischer Widerstand [Ω·cm] |
|---|---|---|
| 1 | 0 | 1321 |
| 2 | 50 | 10 |
| 3 | 200 | ca. 0 |
| 4 | 500 | 6 |
| 5 | 2000 | 59 |
| 6 | 5000 | 131 |

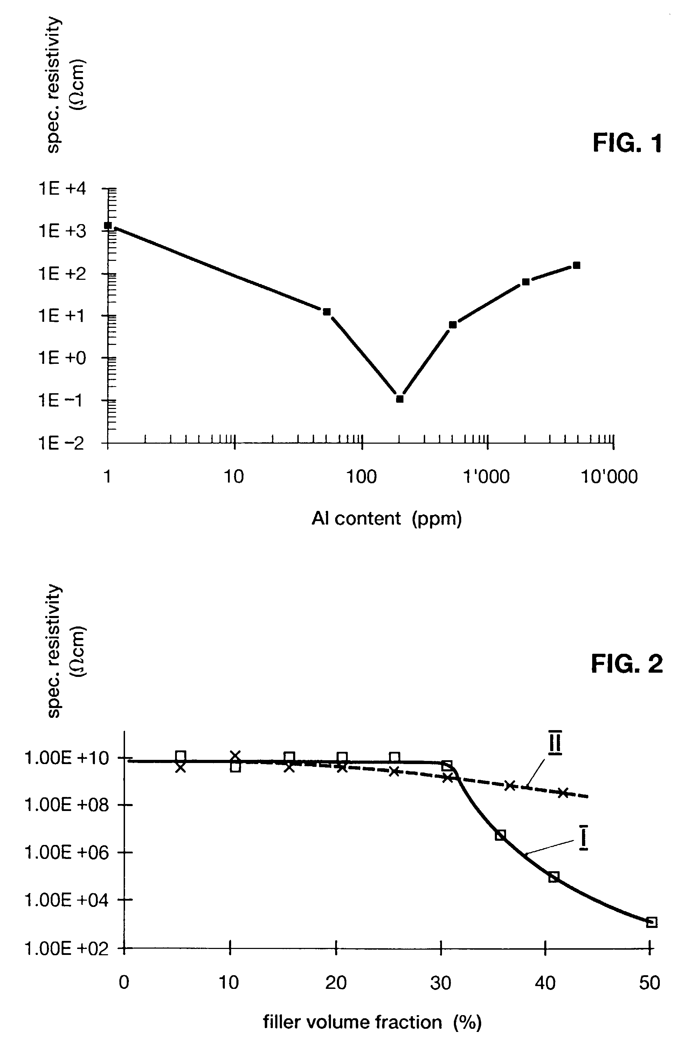

Wie aus dem Diagramm gemäss Fig.1 ersichtlich ist, werden ein besonders kleiner spezifischer elektrischer Widerstand und dementsprechend eine besonders gute elektrische Leitfähigkeit mit Dotiermengen grösser 10 und kleiner 1000 ppm erreicht. Besonders begünstigt ist eine mit Aluminium dotierte Zinkoxidkeramik, welche ca. 200 ppm Aluminium aufweist. Durch Änderung der Sinterbedingungen der Keramik können diese Werte gebenenenfalls verändert werden.

Von besonderem Vorteil ist es, wenn das aus amorphen oder polykristallinen Partikeln bestehende Pulver grosse und kleine Teilchen aufweist, da dann ein besonders hoher Füllungsgrad des Kunststoffs und damit besonders gute mechanische, elektrische und thermische Eigenschaften erreicht werden. Beispielsweise können die Pulver Teilchen mit Grössen unter 50 µm aufweisen, welche dann in Lücken zwischen Teilchen mit Grössen bis zu mehreren hundert µm angeordnet sind.

An Versuchsproben mit einem Füllstoffgehalt von 0, 5, 10, 15, 20, 25, 30, 35, 40 und 50 Volumenprozent wurden der spezifische elektrische Widerstand und die spezifische thermische Leitfähigkeit gemessen. Die Ergebnisse der Widerstandsmessungen sind in Fig. 2 angegeben.

In Fig. 2 ist die funktionale Abhängigkeit des spezifischen elektrischen Widerstandes vom Füllstoffgehalt je nachdem ob der Kunststoff dotiertes ZnO nach der Erfindung oder lediglich undotiertes ZnO enthält mit I oder mit II bezeichnet. Gemessen wurde bei einer Frequenz von 1 kHz mit einem Impedanz-Analysator der Fa. Hewlett Packard des Typs HP 4274 A. Aus der Funktion I ist ersichtlich, dass bis ca. 30 Volumenprozent Füllstoffanteil der spezifische elektrische Widerstand der untersuchten Proben nahezu gleichbleibend 10¹⁰ [Ω·cm] beträgt. Erst bei einem Füllstoffanteil grösser ca. 30 Volumenprozent verringert sich der spezifische elektrische Widerstand drastisch und bleibt oberhalb eines Füllstoffanteils von ca. 50 Volumenprozent mit einem Wert von ca. 3·10³ [Ω·cm] nahezu konstant. Hingegen verringert sich bei dem mit undotiertem ZnO gefüllten Kunststoff (Funktion II) der bei Füllstoffanteilen bis 30 Volumenprozent gleichbleibend 10¹⁰ [Ω·cm] betragende spezifische elektrische Widerstand nur sehr wenig und beträgt bei 40 - 50 Volumenprozent Füllstoffanteil lediglich 10⁸ -10⁹ [Ω·cm], einem zur Lösung von Abschirm- oder Feldsteueraufgaben viel zu kleinen Wert der elektrischen Leitfähigkeit des Kunststoffes.

Die Messungen der thermische Leitfähigkeit zeigten, dass Kunststoffe mit einem Füllstoffanteil von 30 Volumenprozent eine spezifische thermische Leitfähigkeit von 0,61 [W/mK] und mit einem Füllstoffanteil von 40 bzw. 50 Volumenprozent eine solche von 0,92 bzw. 2 [W/mK] besitzen. Diese Kunststoffe weisen daher eine 2 bis 6-fach höhere spezifische thermische Leitfähigkeit auf als Kunststoffe auf der Basis von Russ als Füllstoff, mit einer spezifischen thermischen Leitfähigkeit von typischerweise 0,30 [W/mK].

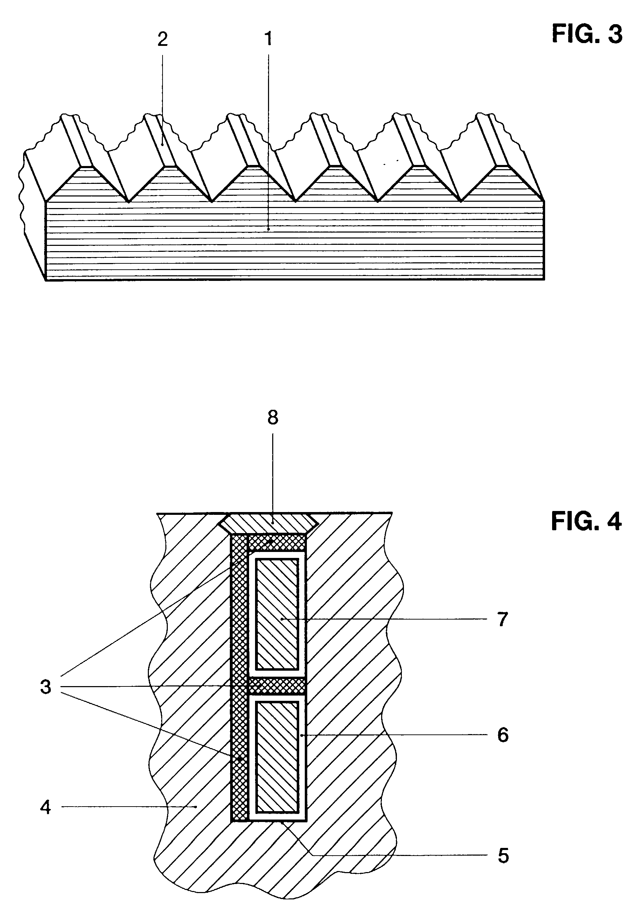

In Fig.3 ist ein Laminat nach der Erfindung mit einem dieser Kunststoffe dargestellt. Das Laminat enthält eine Trägermaterial einbettende Kunststoffmatrix. Das Laminat besteht aus übereinandergestapelten Gewebelagen 1, welche mit dem Kunststoff beschichtet sind. Das Gewebe besteht beispielsweise aus Glasfasern und weist beispielsweise ein Flächengewicht von ca. 23 [g/m²] auf. Das Gewebe wurde in einer Suspension getränkt, welche 100 ppm gelöstes Polysulfon und in der Polysulfon-Lösung gleichmässig verteiltes, mit 500 ppm Aluminium dotiertes ZnO-Pulver enthielt. Zur Erzielung einer dichten Packung bestand das ZnO-Pulver aus zwei Fraktionen. Die mit 600 ppm grössere Fraktion enthielt Partikel mit Grössen zwischen 10 und 200 µm, während die mit 100 ppm kleinere Fraktion Partikel mit Grössen bis 63 µm aufwies. Das getränkte Gewebe wurde bei Temperaturen bis 180°C während ca. 2h getrocknet. Das so erhaltene beschichtete Gewebe wies eine Dicke von ca. 0,3 mm auf.

Mehrere Lagen 1 des beschichteten Gewebes wurden übereinandergestapelt und bei Temperaturen von ca. 250°C und einem Druck von ca. 5 MPa zu einem Laminat verpresst. Aus dem so hergestellten Laminat wurden Probekörper für Messzwecke hergestellt. Anhand dieser Probekörper wurden folgende Eigenschaften des Laminats ermittelt:

| | |
|---|---|
| Dichte | 3,21 [g/cm²] |
| spez. therm. Leitfähigkeit | 2,06 [W/mk] |
| spez. elektr. Widerstand bei Raumtemperatur | 3 [kΩ·cm] |
| thermische Stabilität für Dauerbelastung | 160°C |
| Volumenanteil des ZnO am Kunststoff | 60% |

Gegenüber Laminaten nach dem Stand der Technik mit spezifischen thermischen Leitfähigkeiten von typischerweise 0,3 [W/mK] ist die spezifische thermische Leitfähigkeit ersichtlich um einen Faktor von ca. 7 verbessert. Durch die Verwendung des Kunststoffs nach der Erfindung kann darüber hinaus eine dem Laminat vorgeschriebene elektrische Leitfähigkeit leicht innerhalb eines engen Toleranzbereiches eingehalten werden. Zudem kann das Laminat in einem einfachen und leicht zu beherrschenden Herstellverfahren gefertigt werden. Bei der Ausführung des Herstellverfahrens kann zumindest eine Oberfläche des Laminats mit einer aus Fig.3 ersichtlichen Struktur 2 versehen werden.

Ein solches Laminat kann als Werkstoff mit hoher thermischer Stabilität (Isolierstoffklasse F oder höher) und hoher thermischer sowie niedriger elektrischer - jedoch nichtmetallischer - Leitfähigkeit (spezifischer elektrischer Widerstand typischerweise zwischen 1 und 10 kΩ zur Vermeidung von Aussenkoronaentladungen) im Elektromaschinenbau eingesetzt werden. Insbesondere kann es als Nutverkeilung der Abstützung von Wicklungsstäben in Nutkanälen grosser rotierender elektrischer Maschine, wie Turbo- oder Hydrogeneratoren, dienen.

In Fig.4 ist ein als Nutverkeilung 3 dienendes und den erfindungsgemässen elektrisch halbleitenden Kunststoff enthaltendes Laminat in einer in ein Statorblechpaket 4 eines Generators eingelassenen Nut 5 angeordnet. Die Nut 5 enthält ferner zwei gegeneinander und gegen das Blechpaket mittels einer Hauptisolation 6 elektrisch isolierte Wicklungsstäbe 7. Durch die Nutverkeilung 3 und einen die Nut 5 nach aussen abschliessenden Nutkeil 8 werden die Wicklungsstäbe 7 fest in der Nut 5 verankert. Durch die Wahl von Glasfaser als Gewebe und Polysulfon als Polymer weist das die Nutverkeilung 3 bildende Laminat zumindest eine der Hauptisolation 6 entsprechende Druckfestigkeit auch bei Betriebstemperatur des Generators auf. Durch den Stromfluss in den Wicklungsstäben 7 entstehen resistive und induktive Verluste. Diese Verluste können über die Hauptisolation 6 direkt und über die Nutverkeilung 3 indirekt an das Statorblechpaket 4 abgegeben werden. Durch die Verwendung einer gut wärmeleitenden Nutverkeilung 3 nach der Erfindung wird eine besonders effektive Wärmeableitung aus den Wicklungsstäben 7 erreicht. Die Wicklungsstäbe 7 und das Statorblechpaket 4 liegen auf ganz beträchtlich voneinander abweichenden elektrischen Potentialen. Um zu verhindern, dass die Hauptisolation 6 durch äussere Entladungen zerstört werden kann, ist die Oberfläche der Hauptisolation 6 mit einer elektrisch halbleitenden Beschichtung versehen und bewährt sich die gute elektrische Leitfähigkeit des die Nutverkeilung 3 bildenden Laminats.

Bei der Herstellung des Laminats kann in die Laminatoberfläche die aus Fig.3 ersichtliche Struktur 2 eingeprägt werden. Durch eine solche Struktur 2 wird die mechanische Kopplung zwischen den Wicklungsstäben 7 und der Wand der Nut 5 verbessert und der Wärmeaustausch zwischen den Wicklungsstäben 7 und dem Statorblechpaket 4 erhöht.

### Bezugszeichenliste

- 1: Gewebelagen
- 2: Struktur
- 3: Nutverkeilung
- 4: Statorblechpaket
- 5: Nut
- 6: Hauptisolation
- 7: Wicklungsstäbe
- 8: Nutkeil

## Patentansprüche

1. Laminat mit einem übereinandergestapelte Gewebelagen enthaltenden Trägermaterial und einer das Trägermaterial einbettenden Kunststoffmatrix aus einem thermisch leitfähigen Kunststoff auf der Basis eines Polymers, dadurch gekennzeichnet, dass der Kunststoff elektrisch leitfähig ist und einen in das Polymer eingebetteten Füllstoff enthält, dass der Füllstoff ein halbleitendes, durch Dotierung eine vorgegebene intrinsische elektrische Leitfähigkeit aufweisendes Material ist, und dass der Füllstoffgehalt derart gewählt ist, dass der Kunststoff bei einer Erhöhung des Füllstoffanteils eine weitgehend unveränderte elektrische Leitfähigkeit aufweist.

2. Laminat nach Anspruch 1, dadurch gekennzeichnet, dass das halbleitende Material eine Keramik, insbesondere auf der Basis von BaTiO₃, CdS, Si, SiC, SnO₂, SrTiO₃, TiO₂, Y₁Ba₂,Cu₃O₇₋ₓ und/oder ZnO, ist.

3. Laminat nach Anspruch 2, dadurch gekennzeichnet, dass der Dotierstoff ein Metall, wie insbesondere Al, Cr, In, Li, Ti und/oder Zr, ist.

4. Laminat nach Anspruch 3, dadurch gekennzeichnet, dass der Metallanteil höchstens ein Prozent des Gewichts der Keramik beträgt.

5. Laminat nach Anspruch 4, dadurch gekennzeichnet, dass bei einer mit Aluminium dotierten Zinkoxidkeramik der Metallanteil 10 bis 1000 ppm des Gewichts der Keramik beträgt.

6. Laminat nach einem der Ansprüche 1 bis 5, dadurch gekennzeichnet, dass der Füllstoffgehalt grösser 30 Volumenprozent ist.

7. Laminat nach Anspruch 6, dadurch gekennzeichnet, dass das halbleitende Material aluminiumdotiertes ZnO ist und einen Füllstoffanteil von mindestens 40 Volumenprozent aufweist.

8. Laminat nach einem der Ansprüche 1 bis 7, dadurch gekennzeichnet, dass das Laminat mindestens eine mit einer Struktur (2) versehene Oberfläche aufweist.

9. Laminat nach einem der Ansprüche 1 bis 8, dadurch gekennzeichnet, dass das Laminat der Werkstoff einer Nutverkeilung (3) ist.

## Claims

1. Laminate having a carrier material containing layers of cloth which are stacked one on top of the other, and having a polymer matrix embedding the carrier material and consisting of a thermally conductive plastic based on a polymer, characterized in that the plastic is electrically conductive and contains a filler embedded in the polymer, in that the filler is a semiconducting material having by doping a predetermined intrinsic electrical conductivity, and in that the filler content is chosen such that the plastic has electrical conductivity which is largely unchanged in the case of an increase in the filler fraction.

2. Laminate according to Claim 1, characterized in that the semiconducting material is a ceramic, in particular based on BaTiO3, CdS, Si, SiC, SnO2, SrTiO₃, TiO₂, Y₁Ba₂, Cu₃O₇₋ₓ and/or ZnO.

3. Laminate according to Claim 2, characterized in that the dopant is a metal, such as in particular Al, Cr, In, Li, Ti and/or Zr.

4. Laminate according to Claim 3, characterized in that the metal fraction accounts for at most one per cent of the weight of the ceramic.

5. Laminate according to Claim 4, characterized in that, in the case of a zinc-oxide ceramic doped with aluminium, the metal fraction accounts for 10 to 1000 ppm of the weight of the ceramic.

6. Laminate as claimed in one of Claims 1 to 5, characterized in that the filler content is greater than 30 per cent by volume.

7. Laminate according to Claim 6, characterized in that the semiconducting material is aluminium-doped ZnO and has a filler fraction of at least 40 per cent by volume.

8. Laminate as claimed in one of Claim 1 to 7, characterized in that the laminate has at least one surface provided with a structure (2).

9. Laminate as claimed in one of Claims 1 to 8, characterized in that the laminate is the material of a slot wedging (3).

## Revendications

1. Stratifié ayant un matériau de support contenant des couches de tissu superposées et une matrice de matière synthétique noyant le matériau vecteur, fait d'une matière synthétique conductrice du point de vue thermique, à base d'un polymère, caractérisé en ce que la matière synthétique est électroconductrice et contient une charge noyée dans le polymère, en ce que la charge est un matériau semi-conducteur, présentant, grâce à un dopage, une conductibilité électrique intrinsèque prédéterminée, et en ce que la teneur en charge est choisie de sorte que la matière synthétique présente, en cas d'une augmentation de la teneur en charge, une conductibilité électrique pour l'essentiel non modifiée.

2. Stratifié selon la revendication 1, caractérisé en ce que le matériau semi-conducteur est une céramique, en particulier à base de BaTiO₃, CdS, Si, SiC, SnO₂, SrTiO₃, TiO₂, Y₁Ba₂, Cu₃O₇₋ₓ et/ou ZnO.

3. Stratifié selon la revendication 2, caractérisé en ce que la substance de dopage est un métal, en particulier Al, Cr, Il, In, Ti et/ou Zr.

4. Stratifié selon la revendication 3, caractérisé en ce que la proportion de métal est d'au plus un pour cent du poids de la céramique.

5. Stratifié selon la revendication 4, caractérisé en ce que, pour une céramique d'oxyde de zinc dopée à l'aluminium, la proportion de métal est de 10 à 1000 ppm du poids de la céramique.

6. Stratifié selon l'une des revendications 1 à 5, caractérisé en ce que la teneur en charge est supérieure à 30 pour cent en volume.

7. Stratifié selon la revendication 6, caractérisé en ce que le matériau semi-conducteur est un ZnO dopé à l'aluminium et présente une proportion de charge d'au moins 40 pour cent en volume.

8. Stratifié selon l'une quelconque des revendications 1 à 7, caractérisé en ce que le stratifié présente au moins une surface pourvue d'une structure (2).

9. Stratifié selon l'une quelconque des revendications 1 à 8, caractérisé en ce que le stratifié est le matériau d'un dispositif à clavette de rainure (3).
